Europäisches Patentamt

European Patent Office

Office européen des brevets

(19)

(11) **EP 1 315 124 A2**

(12) **EUROPEAN PATENT APPLICATION**

(43) Date of publication:
28.05.2003 Bulletin 2003/22

(51) Int Cl.⁷: **G06T 9/00**

(21) Application number: 02025328.2

(22) Date of filing: 13.11.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **13.11.2001 US 331239 P**

(71) Applicant: **TRUSIGHT LTD.
35025 Haifa (IL)**

(72) Inventor: **Mordechai, Shefer
Haifa 34349 (IL)**

(74) Representative: **Plebani, Rinaldo et al
STUDIO TORTA S.r.l.,
Via Viotti, 9
10121 Torino (IT)**

(54) **Image compression with dynamic programming**

(57)    A method of compressing and decompressing an image, and an associated system. In an encoder, the image is partitioned among boundary pixels and interior blocks. The boundaries of the interior blocks are interpolated, preferably using dynamic programming, to produce approximation sets that are subtracted from the interior blocks to produce difference sets. The boundary pixels and the difference sets are transmitted to a decoder that interpolates the boundaries to reconstruct the approximation sets, adds the reconstructed approximation sets to the difference sets to reconstruct the interior blocks, and merges the interior blocks with the boundary pixels to reconstruct the image.

FIG. 3

EP 1 315 124 A2

**Description**

FIELD AND BACKGROUND OF THE INVENTION

The present invention relates to image and video compression and, more particularly, to a method and system of image compression and decompression that uses an interpolation method such as dynamic programming to predict approximations of significant portions of an image, with the approximations being subtracted from those portions of the image to produce difference images and with the approximations being added to the difference images to reconstruct the original image.

Digital imaging is the process of converting a scene into a finite sized, two dimensional discrete array of so called "pixels" that digitally store the light intensities of the correspondingly located spots in the scene. From practical reasons it is most convenient to deal with rectangular scenes, so that the corresponding digital images are simply matrices whose entries equal the light levels at the pixels of respective row-column coordinates.

The most commonly used method for still image compression is JPEG (Joint Picture Expert Group) (P. D. Symes, *Video Compression*, McGraw-Hill, 1998), wherein the image is first sub-divided into (usually $8 \times 8$) blocks of pixels and each block undergoes a quantized and further truncated Discrete Cosine Transform (DCT). In the corresponding decompression, the inverse de-quantized DCT is performed to recover a good approximation of the original image.

The most commonly used method for video compression is MPEG (Motion Pictures Expert Group) (P. D. Symes, *op. cit*.). In MPEG compression, the DCT operates on an error image, which is the difference between the current input frame and a predicted frame. The predicted frame is in turn generated by a technique called "motion compensation," wherein the translation, or the so called "motion vector", of each (again, usually $8 \times 8$) block in the current frame is predicted by interpolation from other, "known" frames of the video sequence. The "known" frames are frames that are compressed without prediction, for example as in JPEG. In typical MPEG, 2/3 to 1/10 of the total video frames may be treated as "known".

The main drawbacks of JPEG is its relatively low compression ratios and the noticeability of the $8 \times 8$ blocks in the reconstructed images, a phenomenon commonly referred to as "blocking". One reason for the limited compression ratios is the lack of any interpolation/prediction in JPEG. The blocking is a built-in feature of the method.

As for MPEG, in addition to built-in blocking, other drawbacks include:

1) The process delay that is caused by the use of several frames other than the compressed one for the motion compensation prediction, and
2) The high sensitivity to temporal changes in the video.

High temporal changes can be induced by abrupt translational motion, but also by non-translational motion such as camera rotation and zooming, as well as by noise. In the presence of such high temporal changes, MPEG channels tend to collapse due to the "domino effect" caused by erroneous motion vectors for too many blocks. In this situation no decent frame can be predicted and the whole process just halts.

There is thus a widely recognized need for, and it would be highly advantageous to have, a method of compressing and decompressing still and video images which would overcome the disadvantages of presently known methods as described above.

SUMMARY OF THE INVENTION

According to the present invention there is provided a method of compressing a plurality of pixels, including the steps of: (a) partitioning the pixels among interior pixels and boundary pixels, the interior pixels being partitioned among at least one interior set of the interior pixels such that each interior set is adjacent to a respective boundary set of the boundary pixels; and (b) for each interior set: (i) calculating, from only the respective boundary set, a respective approximation set of the each interior set, and (ii) subtracting the respective approximation set from the each interior set to provide a respective difference set.

According to the present invention there is provided a method of sending an image from an encoder to a decoder, the image including a plurality of pixels, the method including the steps of: (a) partitioning the pixels among interior pixels and boundary pixels, the interior pixels being partitioned among at least one interior set of the interior pixels such that each interior set is adjacent to a respective boundary set of the boundary pixels, by the encoder; (b) for each interior set: (i) calculating, from only the respective boundary set, a respective approximation set of the each interior set, by the encoder, and (ii) subtracting the respective approximation set from the each interior set to provide a respective difference set, by the encoder; and (c) transmitting the boundary pixels and the at least one difference set, by the encoder, to the decoder.

According to the present invention there is provided a system for compressing, transmitting and reconstructing an image that includes a plurality of pixels, the system including: (a) an encoder including: (i) a partitioner for partitioning the pixels among interior pixels and boundary pixels, the interior pixels being partitioned among at least one interior set of the interior pixels such that each interior set is adjacent to a respective boundary set of the boundary pixels, (ii) an encoder mechanism for, for each interior set, calculating, from only the respective boundary set, a respective approximation set of the each interior set, (iii) a subtracter for, for each interior set, subtracting the respective approximation set from the each interior set to provide a respective difference sets, and (iv) a transmitter for transmitting the boundary pixels and the at least one difference set.

The present invention is a method for compressing a captured digital image and later decompressing the compressed image for the purpose of displaying the decompressed image, and a system for implementing the invention. The system device that compresses the image is called an "encoder" herein. The system device that decompresses the compressed image is called a "decoder" herein. The process of getting the compressed image from the encoder to the decoder is referred to herein as "transmitting" the compressed image from the encoder to the decoder and "receiving" the compressed image by the decoder. As such, such "transmitting" and "receiving" includes not only processes, such as transmitting a compressed image from a TV camera to a remote receiver, that normally are considered to be instances of "transmitting" and "receiving", but also processes, such as archiving the compressed image in a database and then retrieving the compressed image for display, that are not normally considered to be instances of "transmitting" and "receiving".

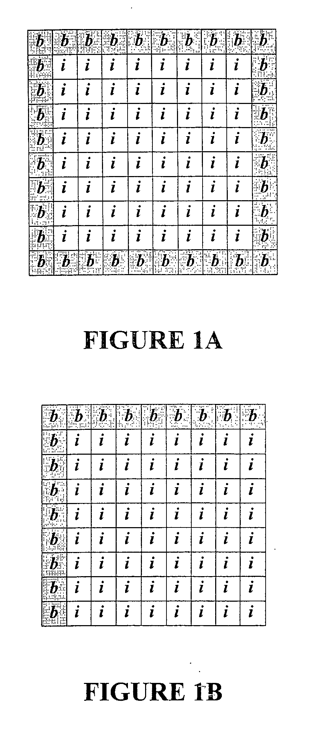

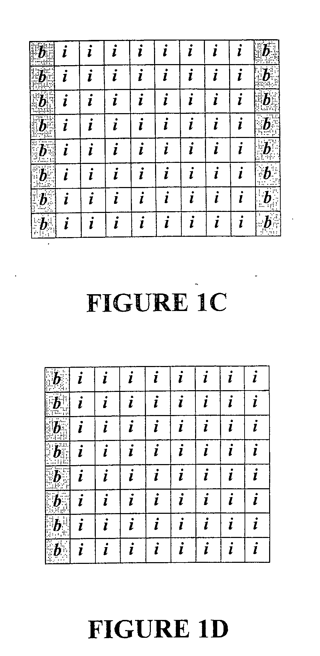

The present invention considers an image to be a rectangular array of pixels. The basic idea of the present invention is to partition the array among two kinds of pixels: boundary pixels and interior pixels. Each set of interior pixels is adjacent to a respective set of boundary pixels. Instead of transmitting the whole image, only the boundary pixels are transmitted, along with "difference sets" corresponding to the sets of interior pixels, with each difference set being the difference between a set of interior pixels and corresponding pixels that are calculated from only the corresponding boundary pixels, either by interpolating the corresponding boundary pixels or by extrapolating the corresponding boundary pixels. Calculating the interpolated or extrapolated pixels "only" from the corresponding boundary pixels means that no interior pixels participate in the calculation. The smallest image for which the present invention is defined is the trivial case of one interior pixel adjacent to one boundary pixel, in which case the "calculating" consist of merely copying the boundary pixel. The usual nontrivial case of interpolation is that in which the sets of interior pixels are surrounded by the respective sets of boundary pixels, as illustrated in Figure 1A, which shows a block of 64 interior pixels, labeled "*i*", surrounded by 36 boundary pixels, labeled "*b*". Other possibilities include extrapolating boundary pixels that are adjacent to a corner and two sides of a block of interior pixels, as illustrated in Figure 1B; interpolating boundary pixels that are on two opposite sides of a block of interior pixels, as illustrated in Figure 1C; and extrapolating boundary pixels that are on one side of a block of interior pixels, as illustrated in Figure 1D.. The sets of interior pixels are called "interior sets" herein. The corresponding sets of boundary pixels are called "boundary sets" herein. The corresponding sets of interpolated or extrapolated pixels are called "approximation sets" herein. The difference between an interior set and the corresponding approximation set is called a "difference set" herein.

The compression described above is performed by the encoder. The encoder transmits the boundary pixels and the difference sets to the decoder. The decoder reconstructs each approximation set by interpolating or extrapolating the corresponding boundary set just as the encoder interpolated or extrapolated the boundary set to produce the approximation set, combines the corresponding difference set with the reconstructed approximation set to obtain a corresponding reconstructed interior set, and merges the reconstructed interior sets with the boundary pixels to produce a reconstructed image.

Preferably, the interpolations are effected using dynamic programming.

Combining corresponding difference sets and reconstructed approximation sets is effected most simply by merely adding each difference set to the corresponding reconstructed approximation set. Preferably, however, corresponding difference sets and reconstructed approximation sets are combined using a Kalman filter.

Preferably, the encoder compresses the boundary pixels and the difference sets before transmitting them to the decoder. The first processing step at the decoder then is decompression of the received boundary pixels and the received difference sets. The compression and decompression of the boundary pixels and of the difference sets may be lossy or lossless.

The encoder of the present invention includes a partitioner for partitioning the image into boundary pixels and interior sets, a mechanism for producing the approximation sets, a subtracter for producing the difference sets, and a transmitter for transmitting the boundary pixels and the difference sets to the decoder. The decoder of the present invention includes a receiver for receiving the boundary pixels and the difference sets, a mechanism for reconstructing the approximation sets, a mechanism for combining the difference sets with the reconstructed approximation sets, and a merger for merging the reconstructed interior sets with the boundary pixels to reconstruct the image.

Preferably, the encoder also includes a compressor for compressing the boundary pixels and the difference sets prior to transmission; and the decoder includes a corresponding decompressor for decompressing the received compressed boundary pixels and the received compressed difference sets.

The present invention is aimed at circumventing the main drawbacks of both JPEG and MPEG. This is achieved by confining the interpolation/prediction stage to only the frame being compressed. In the present invention the predicted blocks are interpolated from their boundaries, which in turn are treated as "known".

Compression ratios are maintained at the level of MPEG, because the compression operates primarily on an error image. The blocking is less prominent than in JPEG and MPEG because each block shares the same "known" boundaries with its adjacent neighbors.

For commercial video the process delay of the present invention's compression is typically 8 TV lines, less than 2% of a full frame period.

As for motion/noise sensitivity the present compression scheme is inherently insensitive to those parameters, because it treats each block of every frame completely separately and independently of the other blocks of the same and other frames.

## BRIEF DESCRIPTION OF THE DRAWINGS

The invention is herein described, by way of example only, with reference to the accompanying drawings, wherein:

FIGs. 1A, 1B, 1C and 1D illustrate four ways in which boundary pixels can be adjacent to interior pixels;
FIG. 2 illustrates the partitioning of an image among boundary pixels and interior blocks;
FIG. 3 is a flowchart of image compression according to the present invention;
FIGs. 4A-4G illustrate the propagation of a state vector from the boundary of an 8x8 block into the interior of the 8x8 block.
FIG. 5 is a flowchart of image decompression according to the present invention;
FIG. 6 is a schematic block diagram of an encoder of the present invention;
FIG. 7 is a schematic block diagram of a decoder of the present invention;
FIG. 8 shows a 10x10 image that was compressed and decompressed using the method of the present invention;
FIG. 9 shows the image of FIG. 8 after lossy compression and decompression;
FIG. 10 shows the difference between the images of FIGs. 8 and 9.

## DESCRIPTION OF THE PREFERRED EMBODIMENTS

The present invention is of a method of image compression and decompression which can be used to compress and decompress both still images and video frames. Specifically, the present invention can be used to compress and decompress a video stream more efficiently and more accurately than prior art methods such as MPEG.

The principles and operation of image compression according to the present invention may be better understood with reference to the drawings and the accompanying description.

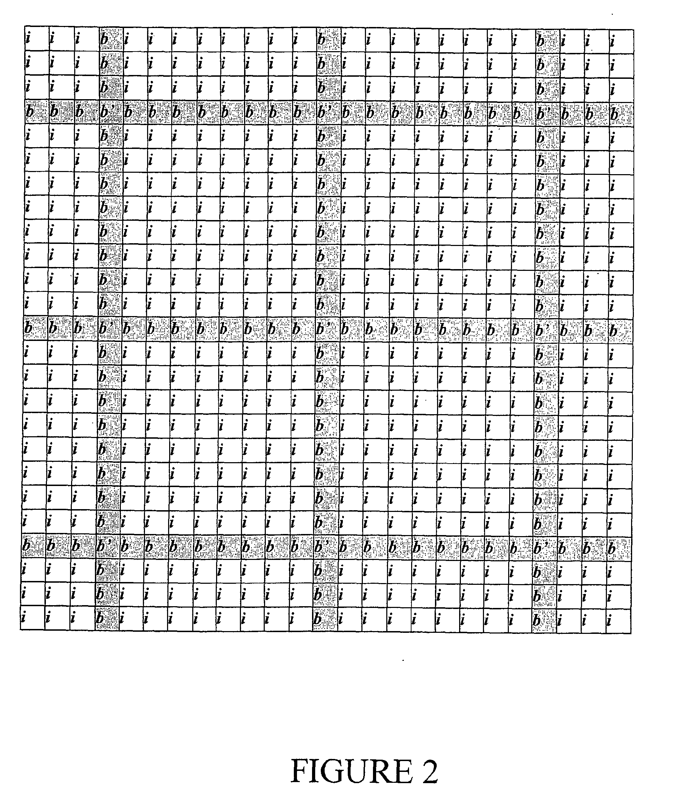

Returning now to the drawings, Figure 2 illustrates the partitioning of an input image according to the present invention. Specifically, Figure 2 illustrates a portion of an image that has been partitioned, according to the present invention, into boundary pixels, labeled "*b*" and "*b'*", and interior pixels, labeled "*i*". To enhance the contrast between the boundary pixels and the interior pixels, the boundary pixels are shaded. The interior pixels come in 8x8 blocks, and each block is surrounded by a corresponding set of 36 boundary pixels. Each block of interior pixels constitutes an "interior set". The set of boundary pixels that surrounds a block of interior pixels is considered to be the "boundary set" that corresponds to that block of interior pixels. Note that each pair of adjacent blocks of interior pixels shares eight boundary pixels *b* and two boundary pixels *b'* in common, so that each boundary pixel *b* is a member of two different boundary sets, and each boundary pixel *b'* is a member of four different boundary sets.

In the example illustrated in Figure 2, the blocks of interior pixels are 8x8 blocks. This is only a non-limitative example. The blocks of interior pixels may be blocks of any convenient size and shape, although rectangular and square blocks are preferred for processing efficiency.

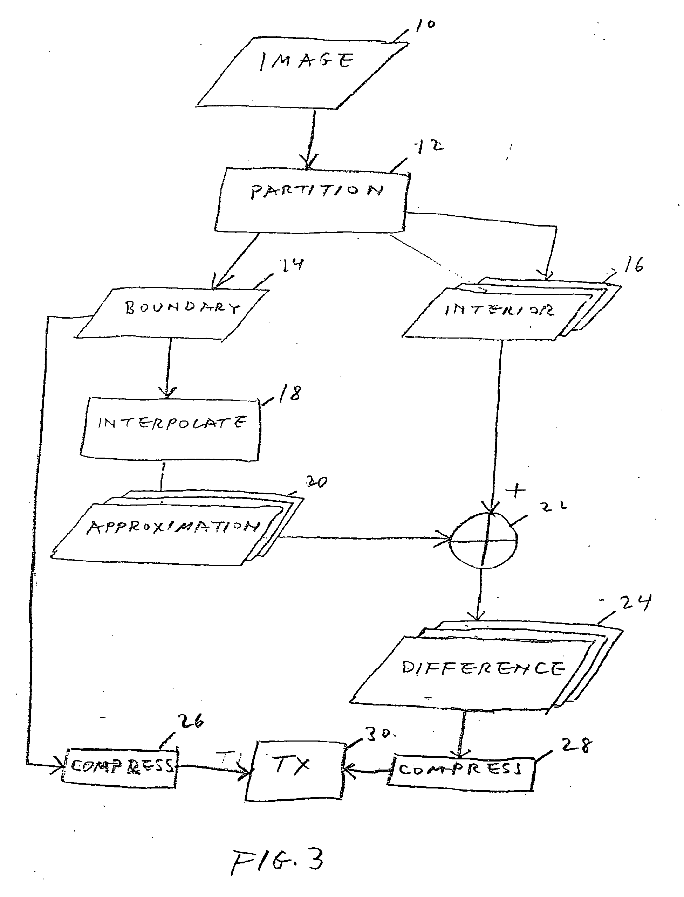

The encoding phase of the present invention consists of four steps, as illustrated in Figure 3. In the first step (block **12**), an input image **10** is partitioned among boundary pixels **14** and interior pixels **16**. In the second step (block **18**), for each block of interior pixels, the corresponding set of boundary pixels (36 boundary pixels per boundary pixel set if the block is 8x8 as in Figure 2) is interpolated to provide a corresponding set **20** of approximation pixels that is intended to resemble the targeted block of interior pixels. In the third step (block **22**), for each block of interior pixels, the pixels of approximation set **20** are subtracted from the corresponding interior pixels **16** to provide a corresponding set **24** of difference pixels. Finally, in the fourth step, boundary pixels **14** and difference sets **24** are compressed (blocks **26** and **28**) and then transmitted to the decoder (block **30**).

The interpolations of block **18** may be as simple as replacing each interior pixel with a weighted sum of the boundary pixels that surround that interior pixel's block, with the weights being a monotonically decreasing function of the Euclidean distances between the interior pixel and the boundary pixels. The preferred interpolation method, however, is dynamic programming, as described for example in R. E. Bellman and S. E. Dreyfus, *Applied Dynamic Programming*, Princeton University Press, Princeton NJ, 1962. The values of the 36 boundary pixels of a block are considered to be initial values of 36 elements of a state vector. The interpolation process is implemented as a controlled Markov sequence, in which the state vector is propagated towards the interior of the block.

The process is cast as an optimal control problem by considering a 36-component state vector that is assumed to obey the dynamic process

$$x_{k+1} = F_k x_k + u_k + f_f + w_k \tag{1}$$

where $x$ is the 36-component state vector, $k$ is a stage index, F is an open loop (Markov) process matrix, $u$ is a control vector, $f_f$ is a prescribed forcing function vector and $w$ is a zero-mean process noise vector with a known covariance $Q$. The problem is to find a so-called "optimal control" $u^*$ that minimizes the differences along the center cross, *i.e.*, on the borders between the four inner quadrants. The solution via dynamic programming is obtained by defining a quadratic performance criterion

$$J = \sum_{k=1}^{N-1} (\frac{1}{2} x_k^T A x_k + \frac{1}{2} u_k^T B u_k) + J_f(x_N) \tag{2}$$

where $N$ is the total number of stages of the process. The optimal cost-to-go from the $k$-th stage is given by

$$J_k^* = \frac{1}{2} x_k^T S_k x_k + \psi_k x_k \tag{3}$$

and the minimizing control is given by

$$u_k^* = -(B + S_{k+1})^{-1}[S_{k+1}(F_k x_k + f_f) + \psi_{k+1}^T] \tag{4}$$

*i.e.*,

$$u_k^* = -C_k x_k - \theta_k \tag{5}$$

where

$$C_k = (B + S_{k+1})^{-1} S_{k+1} F_k \tag{6}$$

and

$$\theta_k = (B + S_{k+1})^{-1}(S_{k+1} f_f + \psi_{k+1}^T) \tag{7}$$

Also, according to this solution the cost parameters S and $\psi$ are available from the end conditions via the backward regressions

$$S_k = A + C_k^T B C_k + (F_k - C_k)^T S_{k+1}(F_k - C_k) + \Delta S_k \tag{8}$$

and

$$\psi_k = -\theta^T BC + (f_f - \theta)^T S_{k+1}(F_k - C_k) + \psi_{k+1}(F_k - C_k) \tag{9}$$

for which the end conditions are

$$J_f(x_N) = \frac{1}{2} x_N^T S_N x_N + \psi_N x_N \tag{10}$$

and we take $\psi_N \equiv 0$.

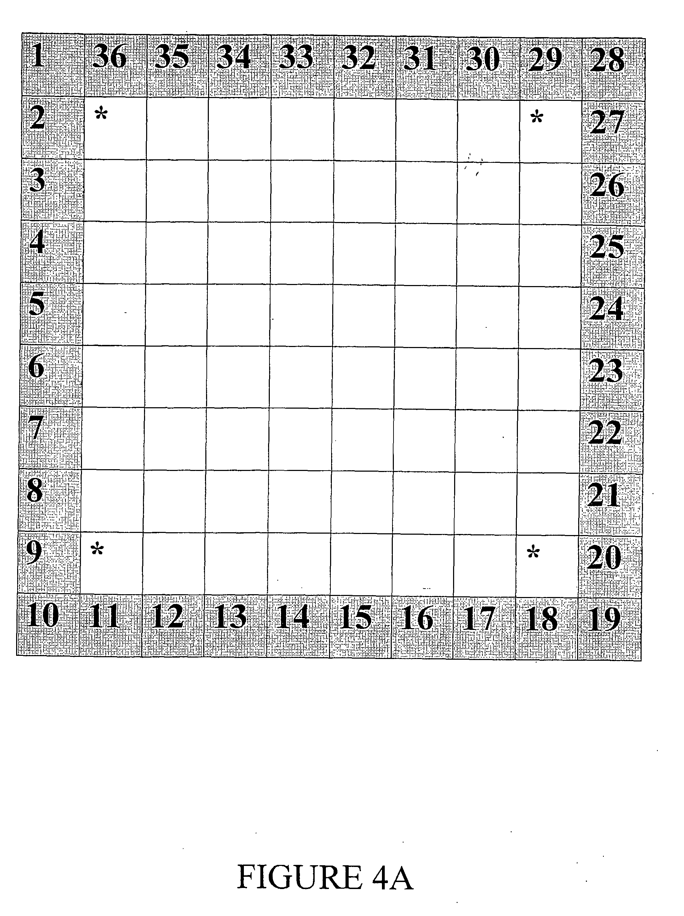

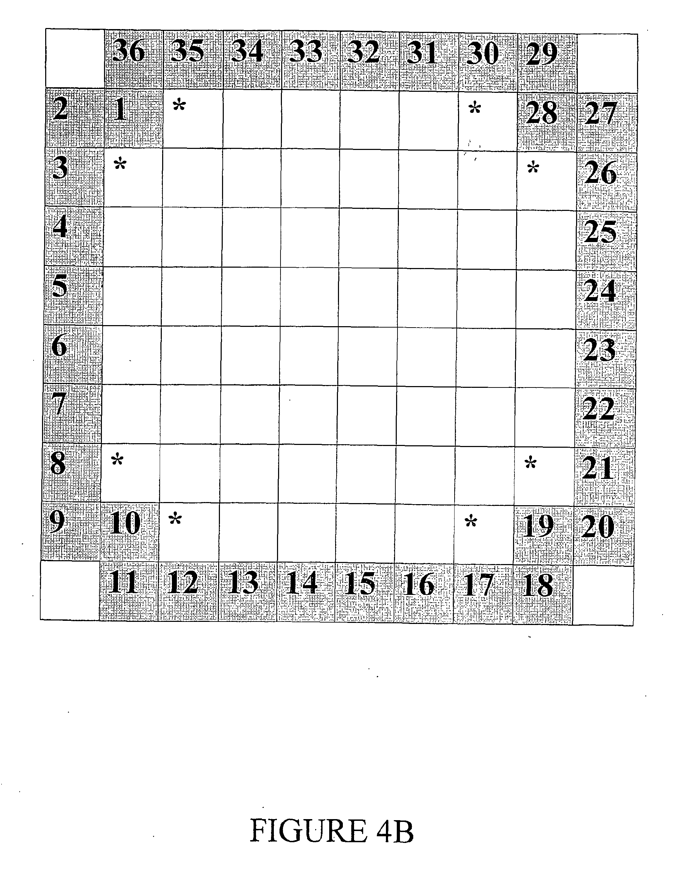

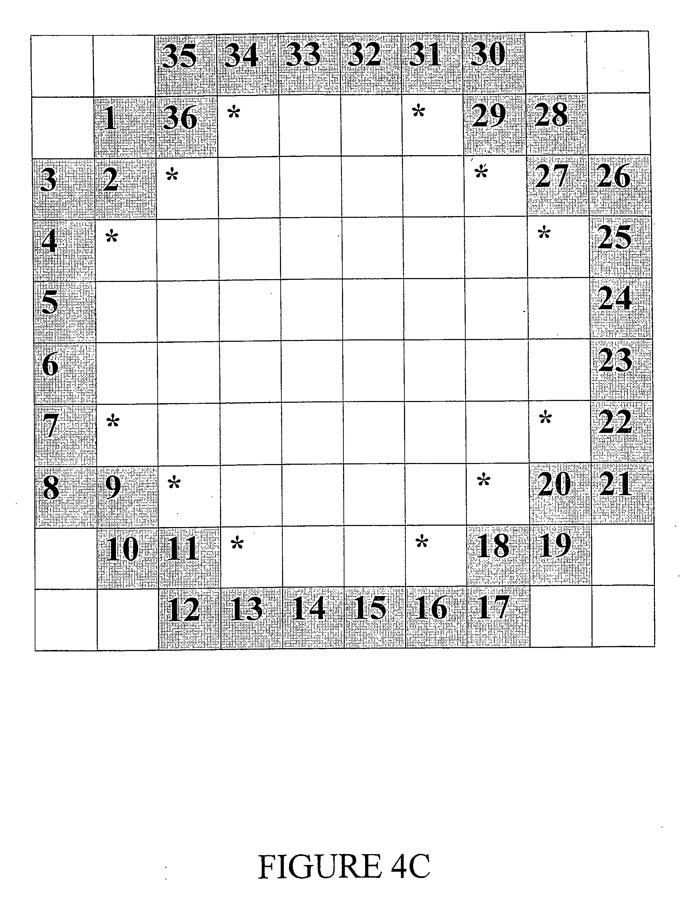

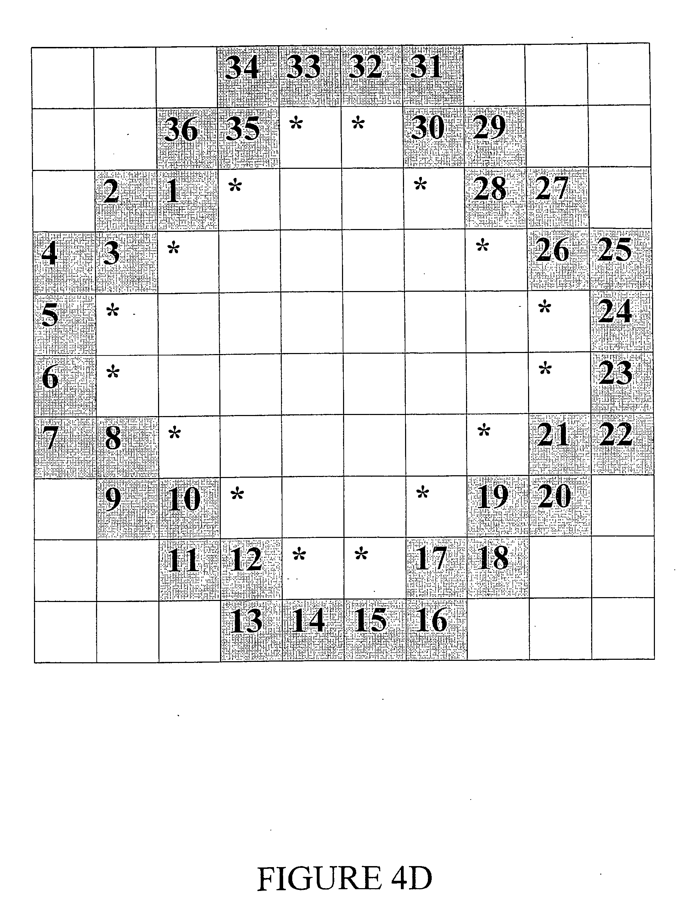

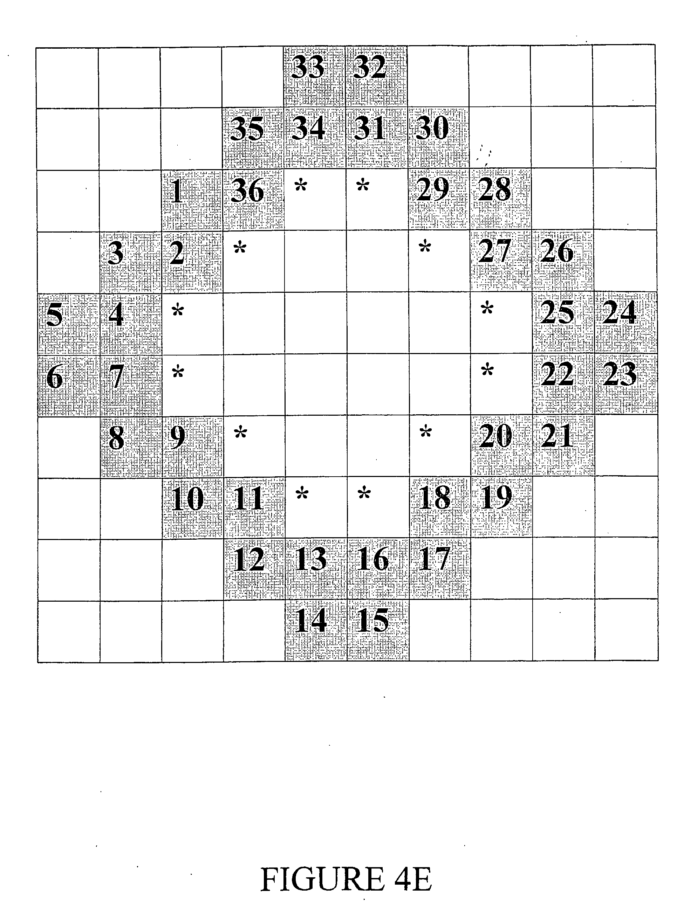

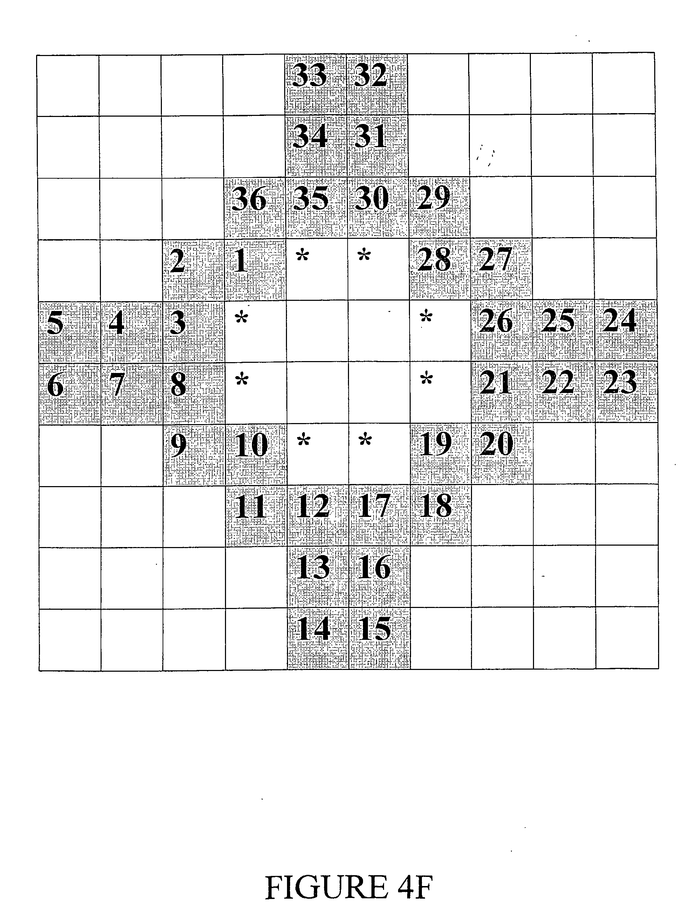

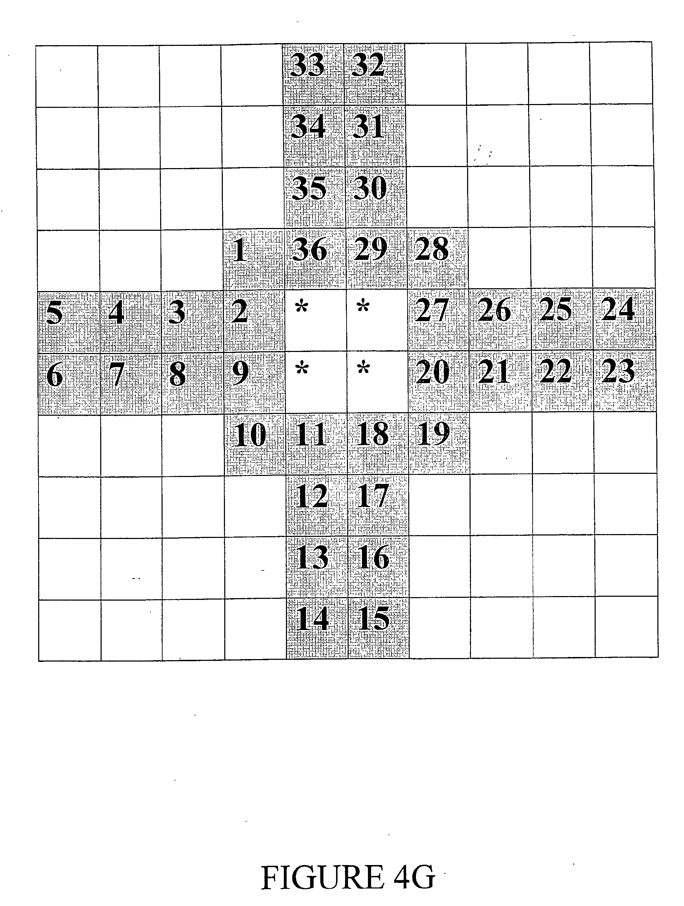

With $F_N$, $S_N$, $\Delta S_N$, $B$ and $f_f$ prescribed, equations (5) through (9) give a set of minimizing controls $\{u^*_1,...,u^*_N\}$. Equation (1) then is used with $w_k$=0 to propagate the state vector forward from $k$=1 to $k$=$N$. Appendix A is a listing of MATLAB™ code for propagating the 36-component state vector from the boundary of an 8x8 block to the interior of an 8x8 block, in $N$=7 stages. Figures 4A-4G illustrate the position of the state vector (shaded, with numbers corresponding to elements of the state vector) relative to the boundary pixels and the interior pixels at the beginning of each stage. In each stage, the interior pixels to be approximated in that stage are marked by asterisks. Each marked interior pixel is approximated based on the values of three state vector pixels: the two state vector pixels that share common edges with the target interior pixel and a third state vector pixel that shares common edges with those two state vector pixels. The state vector element corresponding to the third state vector pixel then is replaced by the approximate value thus obtained. For example, in the first stage, the upper left interior pixel is approximated based on $x(1)$, $x(2)$ and $x$ (36), and then $x(1)$ is set equal to the approximate value thus obtained. At the beginning of the first stage (Figure 4A), the elements of the state vector are the values of the corresponding boundary pixels. At the end of the last stage, $x$ (5), $x(6)$, $x(14)$, $x(15)$, $x(23)$, $x(24)$, $x(32)$ and $x(33)$ retain their initial values, but the other state vector elements are equal to interpolated values of respective interior pixels that lie along the central cross of the 8x8 block.

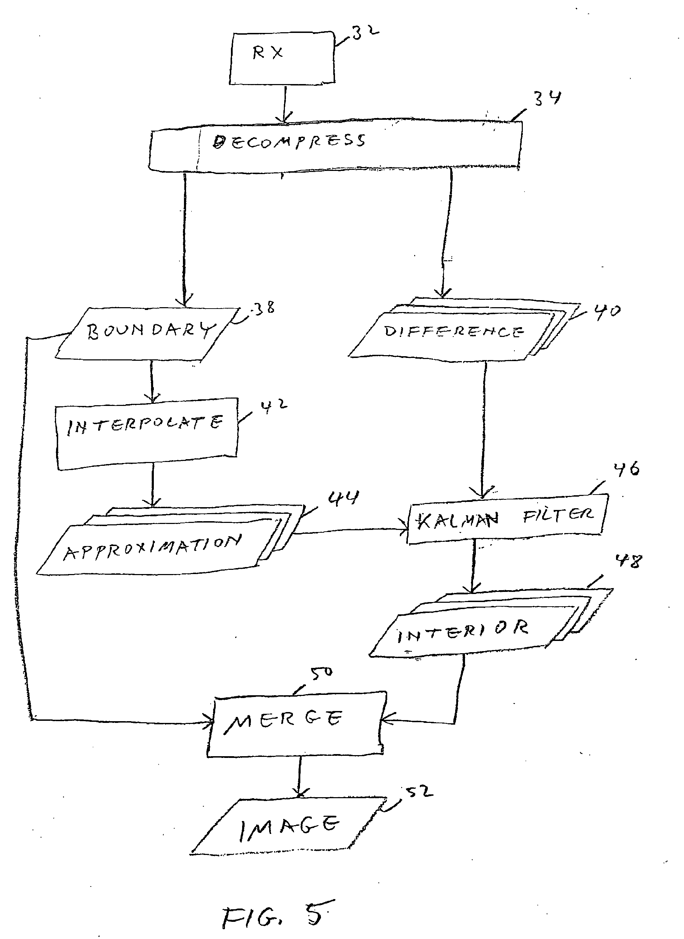

The decoding phase of the present invention consists of four steps, as illustrated in Figure 5. In the first step, the compressed boundary pixels and the compressed difference sets are received (block **32**) and decompressed (block **34**). The first step recovers boundary pixels **38** and difference sets **40**, either exactly, if the compression in blocks **26** and **28** was lossless, or approximately, if the compression in blocks **26** and **28** was lossy. In the second step (block **42**), for each block of interior pixels, the corresponding set of boundary pixels is interpolated to provide a corresponding set **44** of approximation pixels. The interpolation of block **42** is performed identically to the interpolation of block **18**. In the third step (block **46**), for each block of interior pixels, the pixels of approximation set **44** are combined with the corresponding difference pixels **40** to provide a corresponding set **48** of reconstructed interior pixels. Finally, in the fourth step, reconstructed interior pixels **48** are merged with boundary pixels **38** to produce a reconstructed image **52**.

To compensate for quantization error and truncation error due to the compression, the combining of approximation set **44** with corresponding difference pixels **40** is done using a Kalman filter. A Kalman filter is an algorithm for estimating values of a state vector $x$ that obeys a dynamic process similar to equation (1):

$$x_{k+1} = F_k x_k + u_k + f_f + w_k \tag{11}$$

based on measurements that are related to the state vector by a measurement process:

$$y_k = H x_k + v_k \tag{12}$$

where $v_k$ is measurement noise, assumed to be of zero mean, and normally distributed with a covariance $R$. Each stage of the algorithm has two phases, a prediction phase and a correction phase. In the prediction phase, an *a priori* estimate of $x_{k+1}$, denoted $\bar{x}_{k+1}$, is obtained using equation 11:

$$\bar{x}_{k+1} = F_k \hat{x}_k + u_k + f_f \tag{13}$$

In the correction phase, $x_{k+1}$ is obtained as an *a postiori* estimate, based on $\bar{x}_{k+1}$ and the corresponding measured $y_{k+1}$:

$$\hat{x}_{k+1} = \bar{x}_{k+1} + K(y_{k+1} - H\bar{x}_{k+1}) \tag{14}$$

where the Kalman gain matrix $K$ is defined via an error covariance matrix

$$\Pi_{k+1} = (Q + F_k \Pi_k^{-1} F_k^T)^{-1} + H^T R^{-1} H \qquad (15)$$

as

$$K = \Pi_{k+1}^{-1} H^T R^{-1} \qquad (16)$$

In this case, for each approximation set **44,** the measurement error term in equation (14), $y_{k+1} - H\bar{x}_{k+1}$, is the corresponding difference set **40.** The formal identity of equations (1) and (11) allows interior pixels **48** of each 8x8 block to be reconstructed from the outside in, just as boundary pixels **14** or **38** are interpolated from the outside in to produce approximation pixels **20** or **44.** Note that in the special case of K being the identity matrix, the Kalman filter reduces to simple addition of difference pixels **40** to approximation pixels **44.**

Also note that the combining of approximation set **44** with difference set **40** may be done using a Kalman filter, as described above, independently of whether boundary pixels **14** or **38** are interpolated using dynamic programming.

Appendix B is a listing of MATLAB™ code for linear two-dimensional prediction and Kalman filtering of a 10x10 image.

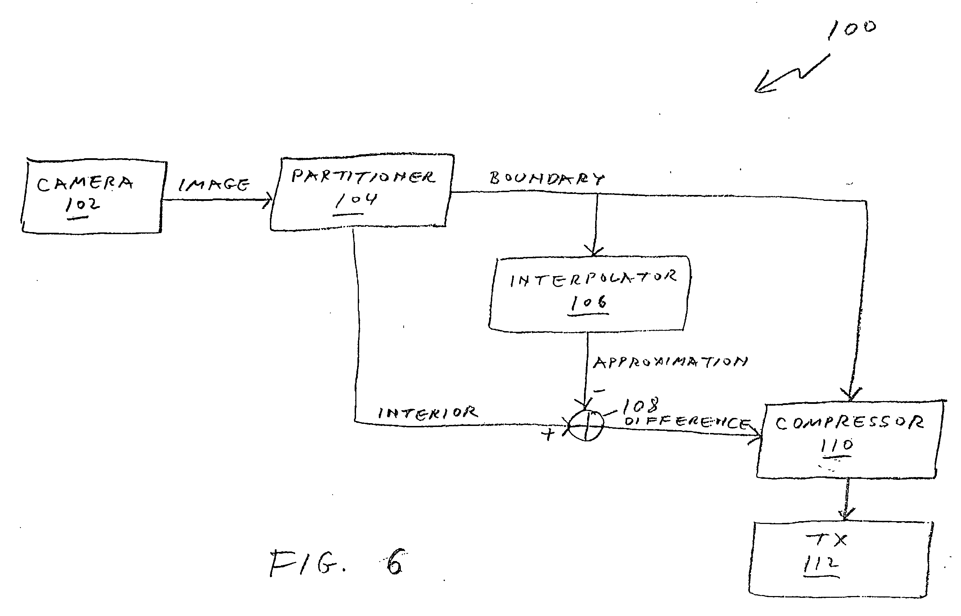

Figure 6 is a schematic block diagram of an encoder **100** of the present invention. An image capture device **102**, such as a digital camera, captures an image and sends the image to a partitioner **104.** Partitioner **104** partitions the image among boundary pixels and interior pixels. The boundary pixels are sent to an interpolator **106** that interpolates the boundary sets of the interior pixel blocks to produce approximation sets. A subtracter **108** subtracts the approximation sets from the corresponding interior pixel blocks to produce corresponding difference sets. The boundary pixels and the difference sets are compressed by a compressor **110** and transmitted by a transmitter **112.**

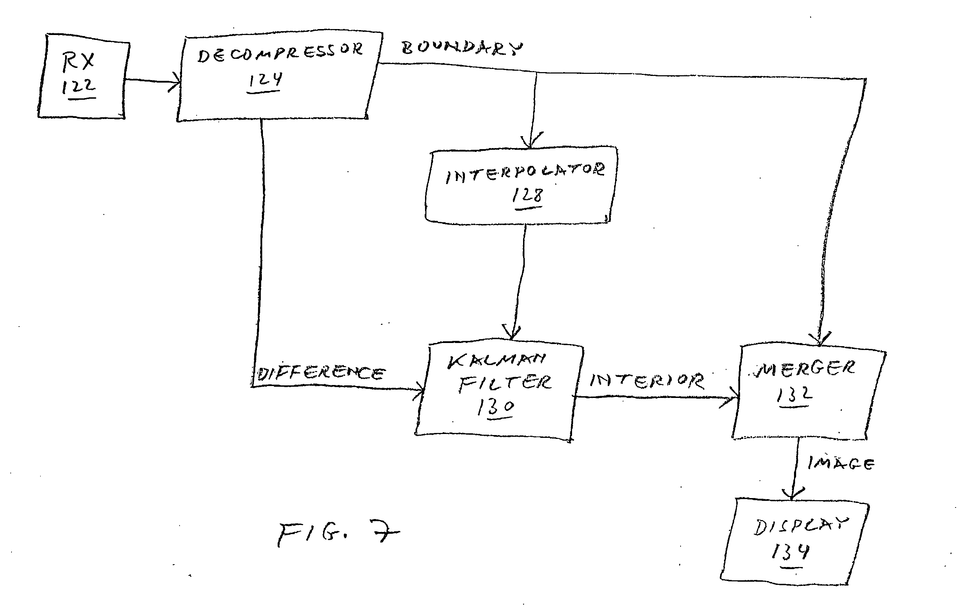

Figure 7 is a schematic block diagram of a decoder **120** of the present invention. The compressed and transmitted boundary pixels and difference sets are received by a receiver **122** and decompressed by a decompressor **124.** The boundary pixels are interpolated by an interpolator **128** to provide approximation sets corresponding to the interior blocks. Corresponding approximation sets and difference sets are combined by a Kalman filter **130** to provide reconstructed blocks of interior pixels. A merger **132** merges the reconstructed interior blocks with the boundary pixels to provide a reconstructed image that is displayed on a display device **134.**

Partitioner **104**, interpolator **106**, subtracter **108** and compressor **110** of encoder **100** may be implemented as software modules in a general purpose computer, as firmware, or as hardware. Similarly, decompressor **124**, interpolator **128**, Kalman filter **130** and merger **132** of decoder **120** may be implemented as software modules in a general purpose computer, as firmware, or as hardware.

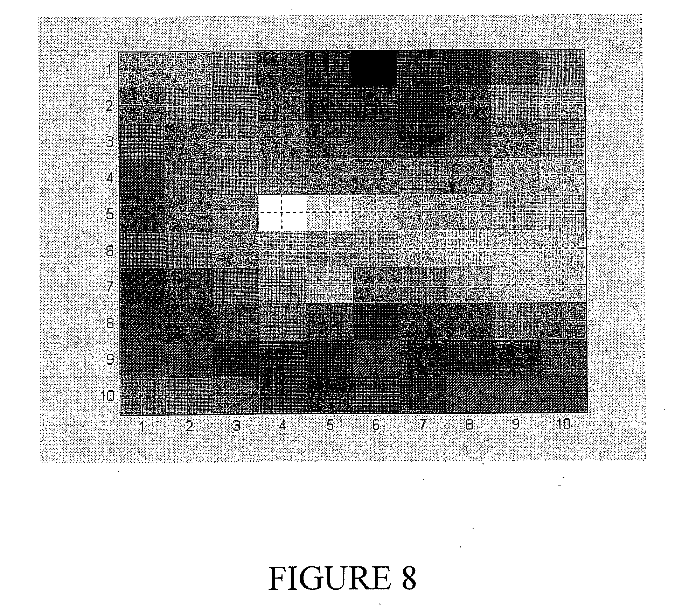

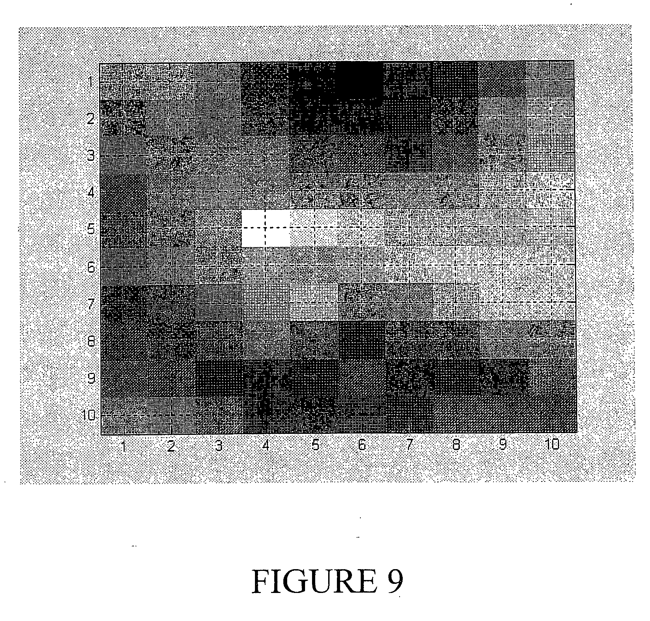

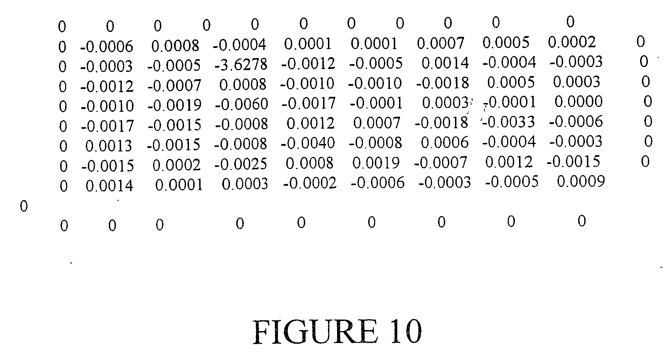

Figure 8 is a 10x10 image that was compressed and decompressed using the method of the present invention. Figure 9 shows the image of Figure 8 after lossy compression and decompression. Figure 10 shows the differences between the input pixels and the output pixels.

While the invention has been described with respect to a limited number of embodiments, it will be appreciated that many variations, modifications and other applications of the invention may be made.

MATLAB CODE FOR INTERPOLATING AN 8X8 BLOCK

```
a=-0.5;
b=0.75;
p=10;
%A=eye(36)/10^10;
A=zeros(36);
B=eye(36);
X(:,:,1)=0.0*ones(36,1,1);
X(1,1,1)=5.0;
X(10,1,1)=5.0;
X(19,1,1)=5.0;
X(28,1,1)=5.0;
X(4,1,1)=5.0;
X(7,1,1)=-5.0;
X(13,1,1)=5.0;
X(16,1,1)=-5.0;
X(22,1,1)=5.0;
X(25,1,1)=-5.0;
X(31,1,1)=5.0;
X(34,1,1)=-5.0;
x1(1)=X(1,1,1);
x2(1)=X(2,1,1);
x3(1)=X(3,1,1);
x4(1)=X(4,1,1);
x5(1)=X(5,1,1);
x6(1)=X(6,1,1);
x7(1)=X(7,1,1);
x8(1)=X(8,1,1);
x9(1)=X(9,1,1);
x10(1)=X(10,1,1);
x11(1)=X(11,1,1);
x12(1)=X(12,1,1);
x13(1)=X(13,1,1);
x14(1)=X(14,1,1);
x15(1)=X(15,1,1);
x16(1)=X(16,1,1);
x17(1)=X(17,1,1);
x18(1)=X(18,1,1);
x19(1)=X(19,1,1);
x20(1)=X(20,1,1);
x21(1)=X(21,1,1);
x22(1)=X(22,1,1);
x23(1)=X(23,1,1);
x24(1)=X(24,1,1);
x25(1)=X(25,1,1);
x26(1)=X(26,1,1);
x27(1)=X(27,1,1);
x28(1)=X(28,1,1);
x29(1)=X(29,1,1);
x30(1)=X(30,1,1);
x31(1)=X(31,1,1);
x32(1)=X(32,1,1);
x33(1)=X(33,1,1);
x34(1)=X(34,1,1);
x35(1)=X(35,1,1);
x36(1)=X(36,1,1);
F(:,:,1)=zeros(36);
```

```
F(:,:,2)=zeros(36);
F(:,:,3)=zeros(36);
F(:,:,4)=zeros(36);
F(:,:,5)=zeros(36);
F(:,:,6)=zeros(36);
F(:,:,7)=zeros(36);
F(1,1,1)=a;
F(1,2,1)=b;
F(1,36,1)=b;
F(10,9,1)=b;
F(10,10,1)=a;
F(10,11,1)=b;
F(19,18,1)=b;
F(19,19,1)=a;
F(19,20,1)=b;
F(28,27,1)=b;
F(28,28,1)=a;
F(28,29,1)=b;
F(1,1,2)=1;
F(2,1,2)=b;
F(36,1,2)=b;
F(9,10,2)=b;
F(10,10,2)=1;
F(11,10,2)=b;
F(18,19,2)=b;
F(19,19,2)=1;
F(20,19,2)=b;
F(27,28,2)=b;
F(28,28,2)=1;
F(29,28,2)=b;
F(1,1,3)=a;
F(1,2,3)=b;
F(1,36,3)=b;
F(2,2,3)=1;
F(3,2,3)=b;
F(8,9,3)=b;
F(9,9,3)=1;
F(10,9,3)=b;
F(10,10,3)=a;
F(10,11,3)=b;
F(11,11,3)=1;
F(12,11,3)=b;
F(17,18,3)=b;
F(18,18,3)=1;
F(19,18,3)=b;
F(19,19,3)=a;
F(19,20,3)=b;
F(20,20,3)=1;
F(21,20,3)=b;
F(26,27,3)=b;
F(27,27,3)=1;
F(28,27,3)=b;
F(28,28,3)=a;
F(28,29,3)=b;
F(29,29,3)=1;
F(30,29,3)=b;
F(35,36,3)=b;
F(36,36,3)=1;
F(1,1,4)=1;
F(2,1,4)=b;
F(2,2,4)=a;
```

```
F(2,3,4)=b;
F(3,3,4)=1;
F(4,3,4)=b;
F(7,8,4)=b;
F(8,8,4)=1;
F(9,8,4)=b;
F(9,9,4)=a;
F(9,10,4)=b;
F(10,10,4)=1;
F(11,10,4)=b;
F(11,11,4)=a;
F(11,12,4)=b;
F(12,12,4)=1;
F(13,12,4)=b;
F(16,17,4)=b;
F(17,17,4)=1;
F(18,17,4)=b;
F(18,18,4)=a;
F(18,19,4)=b;
F(19,19,4)=1;
F(20,19,4)=b;
F(20,20,4)=a;
F(20,21,4)=b;
F(21,21,4)=1;
F(22,21,4)=b;
F(25,26,4)=b;
F(26,26,4)=1;
F(27,26,4)=b;
F(27,27,4)=a;
F(27,28,4)=b;
F(28,28,4)=1;
F(29,28,4)=b;
F(29,29,4)=a;
F(29,30,4)=b;
F(30,30,4)=1;
F(31,30,4)=b;
F(34,35,4)=b;
F(35,35,4)=1;
F(36,1,4)=b;
F(36,35,4)=b;
F(36,36,4)=a;
F(1,1,5)=a;
F(1,2,5)=b;
F(1,36,5)=b;
F(2,2,5)=1;
F(3,2,5)=b;
F(3,3,5)=a;
F(3,4,5)=b;
F(8,7,5)=b;
F(8,8,5)=a;
F(8,9,5)=b;
F(9,9,5)=1;
F(10,9,5)=b;
F(10,10,5)=a;
F(10,11,5)=b;
F(11,11,5)=1;
F(12,11,5)=b;
F(12,12,5)=a;
F(12,13,5)=b;
F(17,16,5)=b;
F(17,17,5)=a;
```

```
F(17,18,5)=b;
F(18,18,5)=1;
F(19,18,5)=b;
F(19,19,5)=a;
F(19,20,5)=b;
F(20,20,5)=1;
F(21,20,5)=b;
F(21,21,5)=a;
F(21,22,5)=b;
F(26,25,5)=b;
F(26,26,5)=a;
F(26,27,5)=b;
F(27,27,5)=1;
F(28,27,5)=b;
F(28,28,5)=a;
F(28,29,5)=b;
F(29,29,5)=1;
F(30,29,5)=b;
F(30,30,5)=a;
F(30,31,5)=b;
F(35,34,5)=b;
F(35,35,5)=a;
F(35,36,5)=b;
F(36,36,5)=1;
F(1,1,6)=1;
F(2,1,6)=b;
F(2,2,6)=a;
F(2,3,6)=b;
F(9,8,6)=b;
F(9,9,6)=a;
F(9,10,6)=b;
F(10,10,6)=1;
F(11,10,6)=b;
F(11,11,6)=a;
F(11,12,6)=b;
F(18,17,6)=b;
F(18,18,6)=a;
F(18,19,6)=b;
F(19,19,6)=1;
F(20,19,6)=b;
F(20,20,6)=a;
F(20,21,6)=b;
F(27,26,6)=b;
F(27,27,6)=a;
F(27,28,6)=b;
F(28,28,6)=1;
F(29,28,6)=b;
F(29,29,6)=a;
F(29,30,6)=b;
F(36,1,6)=b;
F(36,35,6)=b;
F(36,36,6)=a;
F(1,1,7)=a;
F(1,2,7)=b;
F(1,36,7)=b;
F(10,9,7)=b;
F(10,10,7)=a;
F(10,11,7)=b;
F(19,18,7)=b;
F(19,19,7)=a;
F(19,20,7)=b;
```

```
F(28,27,7)=b;
F(28,28,7)=a;
F(28,29,7)=b;
Phi(:,:,1)=zeros(36);
Phi(:,:,2)=zeros(36);
Phi(:,:,3)=zeros(36);
Phi(:,:,4)=zeros(36);
Phi(:,:,5)=zeros(36);
Phi(:,:,6)=zeros(36);
Phi(:,:,7)=zeros(36);
Phi(2,2,2)=a;
Phi(2,3,2)=b;
Phi(9,8,2)=b;
Phi(9,9,2)=a;
Phi(11,11,2)=a;
Phi(11,12,2)=b;
Phi(18,17,2)=b;
Phi(18,18,2)=a;
Phi(20,20,2)=a;
Phi(20,21,2)=b;
Phi(27,26,2)=b;
Phi(27,27,2)=a;
Phi(29,29,2)=a;
Phi(29,30,2)=b;
Phi(36,35,2)=b;
Phi(36,36,2)=a;
Phi(3,3,3)=a;
Phi(3,4,3)=b;
Phi(8,7,3)=b;
Phi(8,8,3)=a;
Phi(12,12,3)=a;
Phi(12,13,3)=b;
Phi(17,16,3)=b;
Phi(17,17,3)=a;
Phi(21,21,3)=a;
Phi(21,22,3)=b;
Phi(26,25,3)=b;
Phi(26,26,3)=a;
Phi(30,30,3)=a;
Phi(30,31,3)=b;
Phi(35,34,3)=b;
Phi(35,35,3)=a;
Phi(4,4,4)=a;
Phi(4,5,4)=b;
Phi(7,6,4)=b;
Phi(7,7,4)=a;
Phi(13,13,4)=a;
Phi(13,14,4)=b;
Phi(16,15,4)=b;
Phi(16,16,4)=a;
Phi(22,22,4)=a;
Phi(22,23,4)=b;
Phi(25,24,4)=b;
Phi(25,25,4)=a;
Phi(31,31,4)=a;
Phi(31,32,4)=b;
Phi(34,33,4)=b;
Phi(34,34,4)=a;
S(:,:,8)=zeros(36);
S(:,:,7)=zeros(36);
S(:,:,6)=zeros(36);
```

```
S(:,:,5)=zeros(36);
S(:,:,4)=zeros(36);
S(:,:,3)=zeros(36);
S(:,:,2)=zeros(36);
S(:,:,1)=zeros(36);
S(1,1,8)=2*p;
S(10,10,8)=2*p;
S(19,19,8)=2*p;
S(28,28,8)=2*p;
S(1,10,8)=-p;
S(1,28,8)=-p;
S(10,1,8)=-p;
S(28,1,8)=-p;
S(10,19,8)=-p;
S(19,10,8)=-p;
S(28,19,8)=-p;
S(19,28,8)=-p;
dS(:,:,8)=zeros(36);
dS(:,:,7)=zeros(36);
dS(:,:,6)=zeros(36);
dS(:,:,5)=zeros(36);
dS(:,:,4)=zeros(36);
dS(:,:,3)=zeros(36);
dS(:,:,2)=zeros(36);
dS(:,:,1)=zeros(36);
dS(2,2,7)=p;
dS(9,9,7)=p;
dS(11,11,7)=p;
dS(18,18,7)=p;
dS(20,20,7)=p;
dS(27,27,7)=p;
dS(29,29,7)=p;
dS(36,36,7)=p;
dS(2,9,7)=-p;
dS(9,2,7)=-p;
dS(11,18,7)=-p;
dS(18,11,7)=-p;
dS(27,20,7)=-p;
dS(20,27,7)=-p;
dS(29,36,7)=-p;
dS(36,29,7)=-p;
dS(3,3,6)=p;
dS(8,8,6)=p;
dS(12,12,6)=p;
dS(17,17,6)=p;
dS(21,21,6)=p;
dS(26,26,6)=p;
dS(30,30,6)=p;
dS(35,35,6)=p;
dS(3,8,6)=-p;
dS(8,3,6)=-p;
dS(12,17,6)=-p;
dS(17,12,6)=-p;
dS(21,26,6)=-p;
dS(26,21,6)=-p;
dS(30,35,6)=-p;
dS(35,30,6)=-p;
dS(4,4,5)=p;
dS(7,7,5)=p;
dS(13,13,5)=p;
dS(16,16,5)=p;
```

```
dS(22,22,5)=p;
dS(25,25,5)=p;
dS(31,31,5)=p;
dS(34,34,5)=p;
dS(4,7,5)=-p;
dS(7,4,5)=-p;
dS(13,16,5)=-p;
dS(16,13,5)=-p;
dS(22,25,5)=-p;
dS(25,22,5)=-p;
dS(31,34,5)=-p;
dS(34,31,5)=-p;
u(:,:,7)=zeros(1,36)';
u(:,:,6)=zeros(1,36)';
u(:,:,5)=zeros(1,36)';
u(:,:,4)=zeros(1,36)';
u(:,:,3)=zeros(1,36)';
u(:,:,2)=zeros(1,36)';
u(:,:,1)=zeros(1,36)';
Psi(:,:,8)=zeros(1,36);
Psi(:,:,7)=zeros(1,36);
Psi(:,:,6)=zeros(1,36);
Psi(:,:,5)=zeros(1,36);
Psi(:,:,4)=zeros(1,36);
Psi(:,:,3)=zeros(1,36);
Psi(:,:,2)=zeros(1,36);
Psi(:,:,1)=zeros(1,36);
Thet(:,:,7)=zeros(1,36)';
Thet(:,:,6)=zeros(1,36)';
Thet(:,:,5)=zeros(1,36)';
Thet(:,:,4)=zeros(1,36)';
Thet(:,:,3)=zeros(1,36)';
Thet(:,:,2)=zeros(1,36)';
Thet(:,:,1)=zeros(1,36)';
Ff(:,:,7)=zeros(1,36)';
Ff(:,:,6)=zeros(1,36)';
Ff(:,:,5)=zeros(1,36)';
Ff(:,:,4)=zeros(1,36)';
Ff(:,:,3)=zeros(1,36)';
Ff(:,:,2)=zeros(1,36)';
Ff(:,:,1)=zeros(1,36)';
C(:,:,7)=zeros(36);
C(:,:,6)=zeros(36);
C(:,:,5)=zeros(36);
C(:,:,4)=zeros(36);
C(:,:,3)=zeros(36);
C(:,:,2)=zeros(36);
C(:,:,1)=zeros(36);
X(:,:,8)=zeros(1,36)';
X(:,:,7)=zeros(1,36)';
X(:,:,6)=zeros(1,36)';
X(:,:,5)=zeros(1,36)';
X(:,:,4)=zeros(1,36)';
X(:,:,3)=zeros(1,36)';
X(:,:,2)=zeros(1,36)';
u(:,:,7)=zeros(1,36)';
u(:,:,6)=zeros(1,36)';
u(:,:,5)=zeros(1,36)';
u(:,:,4)=zeros(1,36)';
u(:,:,3)=zeros(1,36)';
u(:,:,2)=zeros(1,36)';
```

```
u(:,:,1)=zeros(1,36)';
for i=1:7,
    k=8-i;
    Ff(:,:,k)=Phi(:,:,k)*X(:,:,1);
    C(:,:,k)=inv(B+S(:,:,k+1))*S(:,:,k+1)*F(:,:,k);

Thet(:,:,k)=inv(B+S(:,:,k+1))*(S(:,:,k+1)*Ff(:,:,k)+Psi(:,:,k+1)');
    S(:,:,k)=A+C(k)'*B*C(:,:,k)+(F(:,:,k)-
C(:,:,k))'*S(:,:,k+1)*(F(:,:,k)-C(:,:,k))+dS(:,:,k);
    S(:,:,k)=(S(:,:,k)+S(:,:,k)')/2;
    Psi(:,:,k)=-Thet(:,:,k)'*B*C(:,:,k)+((Ff(:,:,k)-
Thet(:,:,k))'*S(:,:,k+1)+Psi(:,:,k+1))*(F(:,:,k)-C(:,:,k));
 end;
 for k=1:7,
    u(:,:,k)=-C(:,:,k)*X(:,:,k)-Thet(:,:,k);
    X(:,:,k+1)=F(:,:,k)*X(:,:,k)+Ff(:,:,k)+u(:,:,k);
    x1(k+1)=X(1,1,k+1);
    x2(k+1)=X(2,1,k+1);
    x3(k+1)=X(3,1,k+1);
    x4(k+1)=X(4,1,k+1);
    x5(k+1)=X(5,1,k+1);
    x6(k+1)=X(6,1,k+1);
    x7(k+1)=X(7,1,k+1);
    x8(k+1)=X(8,1,k+1);
    x9(k+1)=X(9,1,k+1);
    x10(k+1)=X(10,1,k+1);
    x11(k+1)=X(11,1,k+1);
    x12(k+1)=X(12,1,k+1);
    x13(k+1)=X(13,1,k+1);
    x14(k+1)=X(14,1,k+1);
    x15(k+1)=X(15,1,k+1);
    x16(k+1)=X(16,1,k+1);
    x17(k+1)=X(17,1,k+1);
    x18(k+1)=X(18,1,k+1);
    x19(k+1)=X(19,1,k+1);
    x20(k+1)=X(20,1,k+1);
    x21(k+1)=X(21,1,k+1);
    x22(k+1)=X(22,1,k+1);
    x23(k+1)=X(23,1,k+1);
    x24(k+1)=X(24,1,k+1);
    x25(k+1)=X(25,1,k+1);
    x26(k+1)=X(26,1,k+1);
    x27(k+1)=X(27,1,k+1);
    x28(k+1)=X(28,1,k+1);
    x29(k+1)=X(29,1,k+1);
    x30(k+1)=X(30,1,k+1);
    x31(k+1)=X(31,1,k+1);
    x32(k+1)=X(32,1,k+1);
    x33(k+1)=X(33,1,k+1);
    x34(k+1)=X(34,1,k+1);
    x35(k+1)=X(35,1,k+1);
    x36(k+1)=X(36,1,k+1);
  end;
ImOut=[x1(2)   x36(3)  x35(4)  x34(5)  x31(5)  x30(4)  x29(3)  x28(2)
       x2(3)   x1(4)   x36(5)  x35(6)  x30(6)  x29(5)  x28(4)  x27(3)
       x3(4)   x2(5)   x1(6)   x36(7)  x29(7)  x28(6)  x27(5)  x26(4)
       x4(5)   x3(6)   x2(7)   x1(8)   x28(8)  x27(7)  x26(6)  x25(5)
       x7(5)   x8(6)   x9(7)   x10(8)  x19(8)  x20(7)  x21(6)  x22(5)
       x8(4)   x9(5)   x10(6)  x11(7)  x18(7)  x19(6)  x20(5)  x21(4)
       x9(3)   x10(4)  x11(5)  x12(6)  x17(6)  x18(5)  x19(4)  x20(3)
       x10(2)  x11(3)  x12(4)  x13(5)  x16(5)  x17(4)  x18(3)  x19(2)];
```

## APPENDIX B

### MATLAB CODE FOR 2D PREDICTION AND KALMAN FILTERING OF A 10X10 IMAGE

```
function y=bellkfimage(Im,a,b,p,q,r)
Q=q*eye(36);
R=r*eye(36);
A=zeros(36);
B=eye(36);
for i=1:8,
    X(:,1,i)=zeros(36,1)';
end
Xe(:,1,1:8)=X(:,:,1:8);
X(1,1,1)=Im(1,1);
X(1,1,2)=Im(2,2);
X(1,1,3)=Im(2,2);
X(1,1,4)=Im(3,3);
X(1,1,5)=Im(3,3);
X(1,1,6)=Im(4,4);
X(1,1,7)=Im(4,4);
X(1,1,8)=Im(5,5);
X(2,1,1)=Im(2,1);
X(2,1,2)=Im(2,1);
X(2,1,3)=Im(3,2);
X(2,1,4)=Im(3,2);
X(2,1,5)=Im(4,3);
X(2,1,6)=Im(4,3);
X(2,1,7)=Im(5,4);
X(3,1,1)=Im(3,1);
X(3,1,2)=Im(3,1);
X(3,1,3)=Im(3,1);
X(3,1,4)=Im(4,2);
X(3,1,5)=Im(4,2);
X(3,1,6)=Im(5,3);
X(4,1,1)=Im(4,1);
X(4,1,2)=Im(4,1);
X(4,1,3)=Im(4,1);
X(4,1,4)=Im(4,1);
X(4,1,5)=Im(5,2);
X(5,1,1)=Im(5,1);
X(6,1,1)=Im(6,1);
X(7,1,1)=Im(7,1);
X(7,1,2)=Im(7,1);
X(7,1,3)=Im(7,1);
X(7,1,4)=Im(7,1);
X(7,1,5)=Im(6,2);
X(8,1,1)=Im(8,1);
X(8,1,2)=Im(8,1);
X(8,1,3)=Im(8,1);
X(8,1,4)=Im(7,2);
X(8,1,5)=Im(7,2);
X(8,1,6)=Im(6,3);
X(9,1,1)=Im(9,1);
X(9,1,2)=Im(9,1);
X(9,1,3)=Im(8,2);
X(9,1,4)=Im(8,2);
X(9,1,5)=Im(7,3);
X(9,1,6)=Im(7,3);
X(9,1,7)=Im(6,4);
```

```
X(10,1,1)=Im(10,1);
X(10,1,2)=Im(9,2);
X(10,1,3)=Im(9,2);
X(10,1,4)=Im(8,3);
X(10,1,5)=Im(8,3);
X(10,1,6)=Im(7,4);
X(10,1,7)=Im(7,4);
X(10,1,8)=Im(6,5);
X(11,1,1)=Im(10,2);
X(11,1,2)=Im(10,2);
X(11,1,3)=Im(9,3);
X(11,1,4)=Im(9,3);
X(11,1,5)=Im(8,4);
X(11,1,6)=Im(8,4);
X(11,1,7)=Im(7,5);
X(12,1,1)=Im(10,3);
X(12,1,2)=Im(10,3);
X(12,1,3)=Im(10,3);
X(12,1,4)=Im(9,4);
X(12,1,5)=Im(9,4);
X(12,1,6)=Im(8,5);
X(13,1,1)=Im(10,4);
X(13,1,2)=Im(10,4);
X(13,1,3)=Im(10,4);
X(13,1,4)=Im(10,4);
X(13,1,5)=Im(9,5);
X(14,1,1)=Im(10,5);
X(15,1,1)=Im(10,6);
X(16,1,1)=Im(10,7);
X(16,1,2)=Im(10,7);
X(16,1,3)=Im(10,7);
X(16,1,4)=Im(10,7);
X(16,1,5)=Im(9,6);
X(17,1,1)=Im(10,8);
X(17,1,2)=Im(10,8);
X(17,1,3)=Im(10,8);
X(17,1,4)=Im(9,7);
X(17,1,5)=Im(9,7);
X(17,1,6)=Im(8,6);
X(18,1,1)=Im(10,9);
X(18,1,2)=Im(10,9);
X(18,1,3)=Im(9,8);
X(18,1,4)=Im(9,8);
X(18,1,5)=Im(8,7);
X(18,1,6)=Im(8,7);
X(18,1,7)=Im(7,6);
X(19,1,1)=Im(10,10);
X(19,1,2)=Im(9,9);
X(19,1,3)=Im(9,9);
X(19,1,4)=Im(8,8);
X(19,1,5)=Im(8,8);
X(19,1,6)=Im(7,7);
X(19,1,7)=Im(7,7);
X(19,1,8)=Im(6,6);
X(20,1,1)=Im(9,10);
X(20,1,2)=Im(9,10);
X(20,1,3)=Im(8,9);
X(20,1,4)=Im(8,9);
X(20,1,5)=Im(7,8);
X(20,1,6)=Im(7,8);
X(20,1,7)=Im(6,7);
```

```
X(21,1,1)=Im(8,10);
X(21,1,2)=Im(8,10);
X(21,1,3)=Im(8,10);
X(21,1,4)=Im(7,9);
X(21,1,5)=Im(7,9);
X(21,1,6)=Im(6,8);
X(22,1,1)=Im(7,10);
X(22,1,2)=Im(7,10);
X(22,1,3)=Im(7,10);
X(22,1,4)=Im(7,10);
X(22,1,5)=Im(6,9);
X(23,1,1)=Im(6,10);
X(24,1,1)=Im(5,10);
X(25,1,1)=Im(4,10);
X(25,1,2)=Im(4,10);
X(25,1,3)=Im(4,10);
X(25,1,4)=Im(4,10);
X(25,1,5)=Im(5,9);
X(26,1,1)=Im(3,10);
X(26,1,2)=Im(3,10);
X(26,1,3)=Im(3,10);
X(26,1,4)=Im(4,9);
X(26,1,5)=Im(4,9);
X(26,1,6)=Im(5,8);
X(27,1,1)=Im(2,10);
X(27,1,2)=Im(2,10);
X(27,1,3)=Im(3,9);
X(27,1,4)=Im(3,9);
X(27,1,5)=Im(4,8);
X(27,1,6)=Im(4,8);
X(27,1,7)=Im(5,7);
X(28,1,1)=Im(1,10);
X(28,1,2)=Im(2,9);
X(28,1,3)=Im(2,9);
X(28,1,4)=Im(3,8);
X(28,1,5)=Im(3,8);
X(28,1,6)=Im(4,7);
X(28,1,7)=Im(4,7);
X(28,1,8)=Im(5,6);
X(29,1,1)=Im(1,9);
X(29,1,2)=Im(1,9);
X(29,1,3)=Im(2,8);
X(29,1,4)=Im(2,8);
X(29,1,5)=Im(3,7);
X(29,1,6)=Im(3,7);
X(29,1,7)=Im(4,6);
X(30,1,1)=Im(1,8);
X(30,1,2)=Im(1,8);
X(30,1,3)=Im(1,8);
X(30,1,4)=Im(2,7);
X(30,1,5)=Im(2,7);
X(30,1,6)=Im(3,6);
X(31,1,1)=Im(1,7);
X(31,1,2)=Im(1,7);
X(31,1,3)=Im(1,7);
X(31,1,4)=Im(1,7);
X(31,1,5)=Im(2,6);
X(32,1,1)=Im(1,6);
X(33,1,1)=Im(1,5);
X(34,1,1)=Im(1,4);
X(34,1,2)=Im(1,4);
```

```
X(34,1,3)=Im(1,4);
X(34,1,4)=Im(1,4);
X(34,1,5)=Im(2,5);
X(35,1,1)=Im(1,3);
X(35,1,2)=Im(1,3);
X(35,1,3)=Im(1,3);
X(35,1,4)=Im(2,4);
X(35,1,5)=Im(2,4);
X(35,1,6)=Im(3,5);
X(36,1,1)=Im(1,2);
X(36,1,2)=Im(1,2);
X(36,1,3)=Im(2,3);
X(36,1,4)=Im(2,3);
X(36,1,5)=Im(3,3);
X(36,1,6)=Im(3,4);
X(36,1,7)=Im(4,5);
Xp(:,:,1)=X(:,:,1);
Xh(:,:,1)=X(:,:,1);
for i=1:7,
    F(:,:,i)=zeros(36);
    Phi(:,:,i)=zeros(36);
    Ff(:,:,i)=zeros(1,36)';
    u(:,:,i)=zeros(1,36)';
    Thet(:,:,i)=zeros(1,36)';
end;
for i=1:8,
    S(:,:,i)=zeros(36);
    dS(:,:,i)=zeros(36);
    Psi(:,:,i)=zeros(1,36);
end;
F(1,1,1)=a;
F(1,2,1)=b;
F(1,36,1)=b;
F(10,9,1)=b;
F(10,10,1)=a;
F(10,11,1)=b;
F(19,18,1)=b;
F(19,19,1)=a;
F(19,20,1)=b;
F(28,27,1)=b;
F(28,28,1)=a;
F(28,29,1)=b;
F(1,1,2)=1;
F(2,1,2)=b;
F(36,1,2)=b;
F(9,10,2)=b;
F(10,10,2)=1;
F(11,10,2)=b;
F(18,19,2)=b;
F(19,19,2)=1;
F(20,19,2)=b;
F(27,28,2)=b;
F(28,28,2)=1;
F(29,28,2)=b;
F(1,1,3)=a;
F(1,2,3)=b;
F(1,36,3)=b;
F(2,2,3)=1;
F(3,2,3)=b;
F(8,9,3)=b;
F(9,9,3)=1;
```

```
F(10,9,3)=b;
F(10,10,3)=a;
F(10,11,3)=b;
F(11,11,3)=1;
F(12,11,3)=b;
F(17,18,3)=b;
F(18,18,3)=1;
F(19,18,3)=b;
F(19,19,3)=a;
F(19,20,3)=b;
F(20,20,3)=1;
F(21,20,3)=b;
F(26,27,3)=b;
F(27,27,3)=1;
F(28,27,3)=b;
F(28,28,3)=a;
F(28,29,3)=b;
F(29,29,3)=1;
F(30,29,3)=b;
F(35,36,3)=b;
F(36,36,3)=1;
F(1,1,4)=1;
F(2,1,4)=b;
F(2,2,4)=a;
F(2,3,4)=b;
F(3,3,4)=1;
F(4,3,4)=b;
F(7,8,4)=b;
F(8,8,4)=1;
F(9,8,4)=b;
F(9,9,4)=a;
F(9,10,4)=b;
F(10,10,4)=1;
F(11,10,4)=b;
F(11,11,4)=a;
F(11,12,4)=b;
F(12,12,4)=1;
F(13,12,4)=b;
F(16,17,4)=b;
F(17,17,4)=1;
F(18,17,4)=b;
F(18,18,4)=a;
F(18,19,4)=b;
F(19,19,4)=1;
F(20,19,4)=b;
F(20,20,4)=a;
F(20,21,4)=b;
F(21,21,4)=1;
F(22,21,4)=b;
F(25,26,4)=b;
F(26,26,4)=1;
F(27,26,4)=b;
F(27,27,4)=a;
F(27,28,4)=b;
F(28,28,4)=1;
F(29,28,4)=b;
F(29,29,4)=a;
F(29,30,4)=b;
F(30,30,4)=1;
F(31,30,4)=b;
F(34,35,4)=b;
```

```
F(35,35,4)=1;
F(36,1,4)=b;
F(36,35,4)=b;
F(36,36,4)=a;
F(1,1,5)=a;
F(1,2,5)=b;
F(1,36,5)=b;
F(2,2,5)=1;
F(3,2,5)=b;
F(3,3,5)=a;
F(3,4,5)=b;
F(8,7,5)=b;
F(8,8,5)=a;
F(8,9,5)=b;
F(9,9,5)=1;
F(10,9,5)=b;
F(10,10,5)=a;
F(10,11,5)=b;
F(11,11,5)=1;
F(12,11,5)=b;
F(12,12,5)=a;
F(12,13,5)=b;
F(17,16,5)=b;
F(17,17,5)=a;
F(17,18,5)=b;
F(18,18,5)=1;
F(19,18,5)=b;
F(19,19,5)=a;
F(19,20,5)=b;
F(20,20,5)=1;
F(21,20,5)=b;
F(21,21,5)=a;
F(21,22,5)=b;
F(26,25,5)=b;
F(26,26,5)=a;
F(26,27,5)=b;
F(27,27,5)=1;
F(28,27,5)=b;
F(28,28,5)=a;
F(28,29,5)=b;
F(29,29,5)=1;
F(30,29,5)=b;
F(30,30,5)=a;
F(30,31,5)=b;
F(35,34,5)=b;
F(35,35,5)=a;
F(35,36,5)=b;
F(36,36,5)=1;
F(1,1,6)=1;
F(2,1,6)=b;
F(2,2,6)=a;
F(2,3,6)=b;
F(9,8,6)=b;
F(9,9,6)=a;
F(9,10,6)=b;
F(10,10,6)=1;
F(11,10,6)=b;
F(11,11,6)=a;
F(11,12,6)=b;
F(18,17,6)=b;
F(18,18,6)=a;
```

```
F(18,19,6)=b;
F(19,19,6)=1;
F(20,19,6)=b;
F(20,20,6)=a;
F(20,21,6)=b;
F(27,26,6)=b;
F(27,27,6)=a;
F(27,28,6)=b;
F(28,28,6)=1;
F(29,28,6)=b;
F(29,29,6)=a;
F(29,30,6)=b;
F(36,1,6)=b;
F(36,35,6)=b;
F(36,36,6)=a;
F(1,1,7)=a;
F(1,2,7)=b;
F(1,36,7)=b;
F(10,9,7)=b;
F(10,10,7)=a;
F(10,11,7)=b;
F(19,18,7)=b;
F(19,19,7)=a;
F(19,20,7)=b;
F(28,27,7)=b;
F(28,28,7)=a;
F(28,29,7)=b;
Phi(2,2,2)=a;
Phi(2,3,2)=b;
Phi(9,8,2)=b;
Phi(9,9,2)=a;
Phi(11,11,2)=a;
Phi(11,12,2)=b;
Phi(18,17,2)=b;
Phi(18,18,2)=a;
Phi(20,20,2)=a;
Phi(20,21,2)=b;
Phi(27,26,2)=b;
Phi(27,27,2)=a;
Phi(29,29,2)=a;
Phi(29,30,2)=b;
Phi(36,35,2)=b;
Phi(36,36,2)=a;
Phi(3,3,3)=a;
Phi(3,4,3)=b;
Phi(8,7,3)=b;
Phi(8,8,3)=a;
Phi(12,12,3)=a;
Phi(12,13,3)=b;
Phi(17,16,3)=b;
Phi(17,17,3)=a;
Phi(21,21,3)=a;
Phi(21,22,3)=b;
Phi(26,25,3)=b;
Phi(26,26,3)=a;
Phi(30,30,3)=a;
Phi(30,31,3)=b;
Phi(35,34,3)=b;
Phi(35,35,3)=a;
Phi(4,4,4)=a;
Phi(4,5,4)=b;
```

```
Phi(7,6,4)=b;
Phi(7,7,4)=a;
Phi(13,13,4)=a;
Phi(13,14,4)=b;
Phi(16,15,4)=b;
Phi(16,16,4)=a;
Phi(22,22,4)=a;
Phi(22,23,4)=b;
Phi(25,24,4)=b;
Phi(25,25,4)=a;
Phi(31,31,4)=a;
Phi(31,32,4)=b;
Phi(34,33,4)=b;
Phi(34,34,4)=a;
S(1,1,8)=2*p;
S(10,10,8)=2*p;
S(19,19,8)=2*p;
S(28,28,8)=2*p;
S(1,10,8)=-p;
S(1,28,8)=-p;
S(10,1,8)=-p;
S(28,1,8)=-p;
S(10,19,8)=-p;
S(19,10,8)=-p;
S(28,19,8)=-p;
S(19,28,8)=-p;
dS(2,2,7)=p;
dS(9,9,7)=p;
dS(11,11,7)=p;
dS(18,18,7)=p;
dS(20,20,7)=p;
dS(27,27,7)=p;
dS(29,29,7)=p;
dS(36,36,7)=p;
dS(2,9,7)=-p;
dS(9,2,7)=-p;
dS(11,18,7)=-p;
dS(18,11,7)=-p;
dS(27,20,7)=-p;
dS(20,27,7)=-p;
dS(29,36,7)=-p;
dS(36,29,7)=-p;
dS(3,3,6)=p;
dS(8,8,6)=p;
dS(12,12,6)=p;
dS(17,17,6)=p;
dS(21,21,6)=p;
dS(26,26,6)=p;
dS(30,30,6)=p;
dS(35,35,6)=p;
dS(3,8,6)=-p;
dS(8,3,6)=-p;
dS(12,17,6)=-p;
dS(17,12,6)=-p;
dS(21,26,6)=-p;
dS(26,21,6)=-p;
dS(30,35,6)=-p;
dS(35,30,6)=-p;
dS(4,4,5)=p;
dS(7,7,5)=p;
dS(13,13,5)=p;
```

```
dS(16,16,5)=p;
dS(22,22,5)=p;
dS(25,25,5)=p;
dS(31,31,5)=p;
dS(34,34,5)=p;
dS(4,7,5)=-p;
dS(7,4,5)=-p;
dS(13,16,5)=-p;
dS(16,13,5)=-p;
dS(22,25,5)=-p;
dS(25,22,5)=-p;
dS(31,34,5)=-p;
dS(34,31,5)=-p;
Pai=eye(36);
for i=1:7,
    k=8-i
    Ff(:,1,k)=Phi(:,:,k)*X(:,:,1);
    C(:,:,k)=inv(B+S(:,:,k+1))*S(:,:,k+1)*F(:,:,k);

Thet(:,:,k)=inv(B+S(:,:,k+1))*(S(:,:,k+1)*Ff(:,:,k)+Psi(:,:,k+1)');
    S1(:,:,k)=A+C(k)'*B*C(:,:,k)+(F(:,:,k)-
C(:,:,k))'*S(:,:,k+1)*(F(:,:,k)-C(:,:,k))+dS(:,:,k);
    S(:,:,k)=(S1(:,:,k)+S1(:,:,k)')/2;
    Psi(:,:,k)=-Thet(:,:,k)'*B*C(:,:,k)+((Ff(:,:,k)-
Thet(:,:,k))'*S(:,:,k+1)+Psi(:,:,k+1))*(F(:,:,k)-C(:,:,k));
end;


for k=1:7,
    k
    u(:,:,k)=-C(:,:,k)*Xh(:,:,k)-Thet(:,:,k);
    Xp(:,:,k+1)=F(:,:,k)*Xh(:,:,k)+Ff(:,:,k)+u(:,:,k);
    Xe(:,:,k+1)=X(:,:,k+1)-Xp(:,:,k+1);
    Pai1=inv(Q+F(:,:,k)*inv(Pai)*F(:,:,k)')+inv(R);
    Pai=(Pai1+Pai1')/2;
    K(:,:,k)=inv(Pai)*inv(R);
    Xh(:,:,k+1)=Xp(:,:,k+1)+K(:,:,k)*Xe(:,:,k+1);
end;
X=Xh;
```

EP 1 315 124 A2

```
ImOut=[X(1,1,1)   X(36,1,1) X(35,1,1) X(34,1,1) X(33,1,1) X(32,1,1) X(31,1,1) X(30,1,1) X(29,1,1) X(28,1,1)
       X(2,1,1)   X(1,1,2)  X(36,1,3) X(35,1,4) X(34,1,5) X(31,1,5) X(30,1,4) X(29,1,3) X(28,1,2) X(27,1,1)
       X(3,1,1)   X(2,1,3)  X(1,1,4)  X(36,1,5) X(35,1,6) X(30,1,6) X(29,1,5) X(28,1,4) X(27,1,3) X(26,1,1)
       X(4,1,1)   X(3,1,4)  X(2,1,5)  X(1,1,6)  X(36,1,7) X(29,1,7) X(28,1,6) X(27,1,5) X(26,1,4) X(25,1,1)
       X(5,1,1)   X(4,1,5)  X(3,1,6)  X(2,1,7)  X(1,1,8)  X(28,1,8) X(27,1,7) X(26,1,6) X(25,1,5) X(24,1,1)
       X(6,1,1)   X(7,1,5)  X(8,1,6)  X(9,1,7)  X(10,1,8) X(19,1,8) X(20,1,7) X(21,1,6) X(22,1,5) X(23,1,1)
       X(7,1,1)   X(8,1,4)  X(9,1,5)  X(10,1,6) X(11,1,7) X(18,1,7) X(19,1,6) X(20,1,5) X(21,1,4) X(22,1,1)
       X(8,1,1)   X(9,1,3)  X(10,1,4) X(11,1,5) X(12,1,6) X(17,1,6) X(18,1,5) X(19,1,4) X(20,1,3) X(21,1,1)
       X(9,1,1)   X(10,1,2) X(11,1,3) X(12,1,4) X(13,1,5) X(16,1,5) X(17,1,4) X(18,1,3) X(19,1,2) X(20,1,1)
       X(10,1,1)  X(11,1,1) X(12,1,1) X(13,1,1) X(14,1,1) X(15,1,1) X(16,1,1) X(17,1,1) X(18,1,1) X(19,1,1)];
y=ImOut;
```

**Claims**

1. A method of compressing a plurality of pixels, comprising the steps of:

   (a) partitioning the pixels among interior pixels and boundary pixels, said interior pixels being partitioned among at least one interior set of said interior pixels such that each said interior set is adjacent to a respective boundary set of said boundary pixels; and
   (b) for each said interior set:

   (i) calculating, from only said respective boundary set, a respective approximation set of said each interior set, and
   (ii) subtracting said respective approximation set from said each interior set to provide a respective difference set.

2. The method of claim 1, wherein said calculating is effected by interpolating said respective boundary set.

3. The method of claim 1, wherein said calculating is effected by extrapolating said respective boundary set.

4. The method of claim 1, further comprising the steps of:

   (c) for each said interior set: combining said respective difference set with said respective approximation set to provide a respective reconstructed interior set; and
   (d) merging said at least one reconstructed interior set with said boundary pixels.

5. The method of claim 4, wherein said combining is effected by adding said respective difference set to said respective approximation set.

6. The method of claim 4, wherein said combining is effected using a Kalman filter.

7. The method of claim 1, wherein said calculating is effected using dynamic programming.

8. The method of claim 1, wherein each said interior set is substantially surrounded by said respective boundary set.

9. A method of sending an image from an encoder to a decoder, the image including a plurality of pixels, the method comprising the steps of:

   (a) partitioning the pixels among interior pixels and boundary pixels, said interior pixels being partitioned among at least one interior set of said interior pixels such that each said interior set is adjacent to a respective boundary set of said boundary pixels, by the encoder;
   (b) for each said interior set:

   (i) calculating, from only said respective boundary set, a respective approximation set of said each interior set, by the encoder, and
   (ii) subtracting said respective approximation set from said each interior set to provide a respective difference set, by the encoder; and
   (c) transmitting said boundary pixels and said at least one difference set, by the encoder, to the decoder.

10. The method of claim 9, wherein each said interior set is substantially surrounded by said respective boundary set.

11. The method of claim 9, wherein said calculating is effected by interpolating said respective boundary set.

12. The method of claim 9, wherein said calculating is effected by extrapolating said respective boundary set.

13. The method of claim 9, wherein said calculating is effected using dynamic programming.

14. The method of claim 9, further comprising the steps of:

   (d) receiving said boundary pixels and said at least one difference set, by the decoder;

(e) for each said interior set:

(i) calculating, from only said respective boundary set, a respective reconstructed approximation set of said each interior set, by the decoder, and
(ii) combining said respective difference set with said respective reconstructed approximation set to provide a respective reconstructed interior set, by the decoder; and

(f) merging said at least one reconstructed interior set with said boundary pixels, by the decoder, to provide a reconstruction of the image.

15. The method of claim 14, wherein said calculating by the decoder is effected by interpolating said respective boundary set.

16. The method of claim 14, wherein said calculating by the decoder is effected by extrapolating said respective boundary set.

17. The method of claim 14, wherein said calculating by the decoder is effected using dynamic programming.

18. The method of claim 14, wherein said combining is effected by adding said respective difference set to said respective reconstructed approximation set.

19. The method of claim 14, wherein said combining is effected using a Kalman filter.

20. The method of claim 14, further comprising the steps of:

(g) compressing said boundary pixels and said at least one difference set, by the encoder, prior to said transmitting of said boundary pixels and said at least one difference set; and
(h) decompressing said compressed boundary pixels and said at least one compressed difference set, by the decoder, prior to said interpolating, adding and merging by the decoder.

21. The method of claim 20, wherein said compression is a lossy compression.

22. The method of claim 20, wherein said compression is a lossless compression.

23. A system for compressing, transmitting and reconstructing an image that includes a plurality of pixels, the system comprising:

(a) an encoder including:

(i) a partitioner for partitioning the pixels among interior pixels and boundary pixels, said interior pixels being partitioned among at least one interior set of said interior pixels such that each said interior set is adjacent to a respective boundary set of said boundary pixels,
(ii) an encoder mechanism for, for each said interior set, calculating, from only said respective boundary set, a respective approximation set of said each interior set,
(iii) a subtracter for, for each said interior set, subtracting said respective approximation set from said each interior set to provide a respective difference sets, and
(iv) a transmitter for transmitting said boundary pixels and said at least one difference set.

24. The system of claim 23, wherein said encoder mechanism includes an interpolator for interpolating said respective boundary set.

25. The system of claim 23, wherein said encoder mechanism includes an extrapolator for extrapolating said respective boundary set.

26. The system of claim 23, further comprising:

(b) a decoder including:

(i) a receiver for receiving said boundary pixels and said at least one difference set,

(ii) a first decoder mechanism for, for each said interior set, calculating, from only said respective boundary set, a respective reconstructed approximation of said each interior set,

(iii) a second decoder mechanism for, for each said interior set, combining said respective difference set with said respective reconstructed approximation set to provide a respective reconstructed interior set, and

(iv) a merger for merging said at least one reconstructed interior set with said boundary pixels, thereby reconstructing the image.

27. The system of claim 26, wherein said first decoder mechanism includes an interpolator for interpolating said respective boundary set.

28. The system of claim 26, wherein said first decoder mechanism includes an extrapolator for extrapolating said respective boundary set.

29. The system of claim 26, wherein said second decoder mechanism includes an adder.

30. The system of claim 26, wherein said second decoder mechanism includes a Kalman filter.

31. The system of claim 26, wherein said encoder further includes:

(v) a compressor for compressing said boundary pixels and said at least one difference set,

so that said boundary pixels are transmitted as compressed boundary pixels and said at least one difference set is transmitted as at least one compressed difference set; and wherein said decoder further includes:

(v) a decompressor for decompressing said compressed boundary pixels and said at least one compressed difference set.

**FIGURE 1A**

**FIGURE 1B**

| *b* | *i* | *i* | *i* | *i* | *i* | *i* | *i* | *i* | *b* |
|---|---|---|---|---|---|---|---|---|---|
| *b* | *i* | *i* | *i* | *i* | *i* | *i* | *i* | *i* | *b* |
| *b* | *i* | *i* | *i* | *i* | *i* | *i* | *i* | *i* | *b* |
| *b* | *i* | *i* | *i* | *i* | *i* | *i* | *i* | *i* | *b* |
| *b* | *i* | *i* | *i* | *i* | *i* | *i* | *i* | *i* | *b* |
| *b* | *i* | *i* | *i* | *i* | *i* | *i* | *i* | *i* | *b* |
| *b* | *i* | *i* | *i* | *i* | *i* | *i* | *i* | *i* | *b* |
| *b* | *i* | *i* | *i* | *i* | *i* | *i* | *i* | *i* | *b* |

## FIGURE 1C

| *b* | *i* | *i* | *i* | *i* | *i* | *i* | *i* |
|---|---|---|---|---|---|---|---|
| *b* | *i* | *i* | *i* | *i* | *i* | *i* | *i* |
| *b* | *i* | *i* | *i* | *i* | *i* | *i* | *i* |
| *b* | *i* | *i* | *i* | *i* | *i* | *i* | *i* |
| *b* | *i* | *i* | *i* | *i* | *i* | *i* | *i* |
| *b* | *i* | *i* | *i* | *i* | *i* | *i* | *i* |
| *b* | *i* | *i* | *i* | *i* | *i* | *i* | *i* |
| *b* | *i* | *i* | *i* | *i* | *i* | *i* | *i* |

## FIGURE 1D

FIGURE 2

FIG. 3

| 1 | 36 | 35 | 34 | 33 | 32 | 31 | 30 | 29 | 28 |
|---|----|----|----|----|----|----|----|----|----|
| 2 | * |  |  |  |  |  |  | * | 27 |
| 3 |  |  |  |  |  |  |  |  | 26 |
| 4 |  |  |  |  |  |  |  |  | 25 |
| 5 |  |  |  |  |  |  |  |  | 24 |
| 6 |  |  |  |  |  |  |  |  | 23 |
| 7 |  |  |  |  |  |  |  |  | 22 |
| 8 |  |  |  |  |  |  |  |  | 21 |
| 9 | * |  |  |  |  |  |  | * | 20 |
| 10 | 11 | 12 | 13 | 14 | 15 | 16 | 17 | 18 | 19 |

# FIGURE 4A

| | 36 | 35 | 34 | 33 | 32 | 31 | 30 | 29 | |
|---|---|---|---|---|---|---|---|---|---|
| 2 | 1 | * | | | | | * | 28 | 27 |
| 3 | * | | | | | | | * | 26 |
| 4 | | | | | | | | | 25 |
| 5 | | | | | | | | | 24 |
| 6 | | | | | | | | | 23 |
| 7 | | | | | | | | | 22 |
| 8 | * | | | | | | | * | 21 |
| 9 | 10 | * | | | | | * | 19 | 20 |
| | 11 | 12 | 13 | 14 | 15 | 16 | 17 | 18 | |

# FIGURE 4B

| | | | | | | | | | |
|---|---|---|---|---|---|---|---|---|---|
| | | 35 | 34 | 33 | 32 | 31 | 30 | | |
| | 1 | 36 | * | | | * | 29 | 28 | |
| 3 | 2 | * | | | | * | 27 | 26 | |
| 4 | * | | | | | * | | 25 | |
| 5 | | | | | | | | 24 | |
| 6 | | | | | | | | 23 | |
| 7 | * | | | | | * | | 22 | |
| 8 | 9 | * | | | | * | 20 | 21 | |
| | 10 | 11 | * | | | * | 18 | 19 | |
| | | 12 | 13 | 14 | 15 | 16 | 17 | | |

FIGURE 4C

35

FIGURE 4D

|   |   |   |   | 33 | 32 |   |   |   |   |
|---|---|---|---|---|---|---|---|---|---|
|   |   |   | 35 | 34 | 31 | 30 |   |   |   |
|   |   | 1 | 36 | * | * | 29 | 28 |   |   |
|   | 3 | 2 | * |   |   | * | 27 | 26 |   |
| 5 | 4 | * |   |   |   |   | * | 25 | 24 |
| 6 | 7 | * |   |   |   |   | * | 22 | 23 |
|   | 8 | 9 | * |   |   | * | 20 | 21 |   |
|   |   | 10 | 11 | * | * | 18 | 19 |   |   |
|   |   |   | 12 | 13 | 16 | 17 |   |   |   |
|   |   |   |   | 14 | 15 |   |   |   |   |

# FIGURE 4E

FIGURE 4F

|   |   |   |   | 33 | 32 |   |   |   |   |
|---|---|---|---|---|---|---|---|---|---|
|   |   |   |   | 34 | 31 |   |   |   |   |
|   |   |   |   | 35 | 30 |   |   |   |   |
|   |   |   | 1 | 36 | 29 | 28 |   |   |   |
| 5 | 4 | 3 | 2 | * | * | 27 | 26 | 25 | 24 |
| 6 | 7 | 8 | 9 | * | * | 20 | 21 | 22 | 23 |
|   |   |   | 10 | 11 | 18 | 19 |   |   |   |
|   |   |   |   | 12 | 17 |   |   |   |   |
|   |   |   |   | 13 | 16 |   |   |   |   |
|   |   |   |   | 14 | 15 |   |   |   |   |

# FIGURE 4G

FIG. 5

FIG. 6

EP 1 315 124 A2

RX
122

→ DECOMPRESSOR
124

BOUNDARY →

INTERPOLATOR
128

DIFFERENCE →

KALMAN
FILTER
130

INTERIOR →

MERGER
132

IMAGE →

DISPLAY
134

FIG. 7

FIGURE 8

FIGURE 9

| 0 | 0 | 0 | 0 | 0 | 0 | 0 | 0 | 0 | 0 | 0 | |
| 0 | -0.0006 | 0.0008 | -0.0004 | 0.0001 | 0.0001 | 0.0007 | 0.0005 | 0.0002 | | 0 |
| 0 | -0.0003 | -0.0005 | -3.6278 | -0.0012 | -0.0005 | 0.0014 | -0.0004 | -0.0003 | | 0 |
| 0 | -0.0012 | -0.0007 | 0.0008 | -0.0010 | -0.0010 | -0.0018 | 0.0005 | 0.0003 | | 0 |
| 0 | -0.0010 | -0.0019 | -0.0060 | -0.0017 | -0.0001 | 0.0003 | -0.0001 | 0.0000 | | 0 |
| 0 | -0.0017 | -0.0015 | -0.0008 | 0.0012 | 0.0007 | -0.0018 | -0.0033 | -0.0006 | | 0 |
| 0 | 0.0013 | -0.0015 | -0.0008 | -0.0040 | -0.0008 | 0.0006 | -0.0004 | -0.0003 | | 0 |
| 0 | -0.0015 | 0.0002 | -0.0025 | 0.0008 | 0.0019 | -0.0007 | 0.0012 | -0.0015 | | 0 |
| 0 | 0.0014 | 0.0001 | 0.0003 | -0.0002 | -0.0006 | -0.0003 | -0.0005 | 0.0009 | | |

0

| 0 | 0 | 0 | 0 | 0 | 0 | 0 | 0 | 0 | | |

# FIGURE 10